# EUROPÄISCHE PATENTSCHRIFT

(11) **EP 3 440 913 B1**
(45) Veröffentlichungstag und Bekanntmachung des Hinweises auf die Patenterteilung: **30.12.2020**
(21) Anmeldenummer: 18186965.2
(22) Anmeldetag: 02.08.2018
(51) Int. Cl.: A01D 34/00, A47L 9/04, A47L 11/40, A47L 5/12, A01D 34/82, A47L 9/00

(54) **SICH SELBSTTÄTIG FORTBEWEGENDES BODENBEARBEITUNGSGERÄT**
AUTONOMOUS MOVING SOIL PREPARATION DEVICE
DISPOSITIF DE TRAITEMENT DU SOL SE DÉPLAÇANT AUTOMATIQUEMENT

(30) Priorität: 11.08.2017 DE 102017118402
(43) Veröffentlichungstag der Anmeldung: 13.02.2019
(73) Patentinhaber: Vorwerk & Co. Interholding GmbH, 42275 Wuppertal (DE)
(72) Erfinder: BLUM, Michael, 42289 Wuppertal (DE)
(74) Vertreter: Müller, Enno

(56) Entgegenhaltungen:
- AU-A1- 2014 353 715
- DE-A1-102007 060 750
- DE-A1-102015 114 265
- KR-A- 20030 085 165
- US-A1- 2004 074 039

## Beschreibung

### Gebiet der Technik

Die Erfindung betrifft ein sich selbsttätig fortbewegendes Bodenbearbeitungsgerät mit einem Gehäuse, mindestens einem zur Fortbewegung elektromotorisch angetriebenen und um eine Antriebsachse rotierbaren Antriebselement und mindestens einem dem Antriebselement in Fortbewegungsrichtung vorauseilenden Anlageelement, welches sich ausgehend von einer Gehäuseunterseite des Gehäuses (8) in Richtung einer zu bearbeitenden Fläche erstreckt, wobei eine in Fortbewegungsrichtung weisende Anlagefläche des Anlageelementes und/oder eine die Anlageflächen zweier Anlageelemente verbindende Verbindungsgerade nicht parallel zu der Antriebsachse des Antriebselementes orientiert ist und bezogen auf die Fortbewegungsrichtung von einer Anlagefläche des Antriebselementes einen Abstand aufweist, der geringer ist als ein Durchmesser des Antriebselementes.

### Stand der Technik

Bodenbearbeitungsgeräte der vorgenannten Art sind im Stand der Technik bekannt. Beispielsweise handelt es sich um Saug- und/oder Wischroboter, welche autonom eine Fläche befahren und dabei Bodenbearbeitungsaufgaben wie Saugen, Wischen oder ähnliches vornehmen können. Das Bodenbearbeitungsgerät kann auch ein Poliergerät, Schleifgerät oder ähnliches sein. Zur Fortbewegung weist das Bodenbearbeitungsgerät ein oder mehrere elektromotorisch angetriebene Antriebselemente auf, welche auf der befahrenen Fläche abrollen und dabei die Fortbewegung des Bodenbearbeitungsgerätes bewirken. Das Antriebselement ist üblicherweise ein Rad des Bodenbearbeitungsgerätes oder ein angetriebenes Arbeitselement wie beispielsweise eine Borstenwalze oder Wischwalze. Die räumliche Orientierung der Antriebsachse des Antriebselementes definiert gleichzeitig die Fortbewegungsrichtung des Bodenbearbeitungsgerätes. Das Anlageelement kann beispielsweise ein passiv mitrollendes Stützrad des Bodenbearbeitungsgerätes sein, welches dem Antriebselement in Fortbewegungsrichtung vorauseilt und das Bodenbearbeitungsgerät gegenüber der zu bearbeitenden Fläche abstützt. Üblicherweise verfügt ein Bodenbearbeitungsgerät über zwei oder mehr solcher Stützräder. Wenn sich das Bodenbearbeitungsgerät einem Hindernis, wie beispielsweise einer Türschwelle oder einer Teppichkante, nähert, trifft zunächst das Stützrad auf das Hindernis. Nachdem das Stützrad das Hindernis überwunden hat, gelangt das Antriebselement in Kontakt mit dem Hindernis.

Zur Überwindung des Hindernisses durch das Stützrad bzw. das Antriebselement ist es erforderlich, dass die Antriebselemente des Bodenbearbeitungsgerätes eine entsprechende Kraft auf die zu bearbeitende Fläche ausüben. Je nach der Höhe des Hindernisses, dem Durchmesser des Antriebselementes oder einer Antriebsleistung des Bodenbearbeitungsgerätes kann das Überwinden eines Hindernisses Probleme bereiten.

Daneben sind Bodenbearbeitungsgeräte bekannt, welche über Bodenbearbeitungselemente verfügen, die in einer Gebrauchsstellung die zu bearbeitende Fläche berühren und nicht parallel zu der Antriebsachse der Antriebselemente orientiert sind, so dass es zu einer Schrägstellung des Bodenbearbeitungsgerätes vor einem Hindernis kommt, wenn die Bodenbearbeitungselemente das Hindernis kontaktieren. Derartige Bodenbearbeitungsgeräte zeigen die Dokumente WO 2015/076630 A1, DE 10 2007 060 750 A1, US 2004/0074039 A1, DE 10 2015 114 265 A1 und KR 2003 0085165 A.

### Zusammenfassung der Erfindung

Ausgehend von dem vorgenannten Stand der Technik ist es Aufgabe der Erfindung, das Bodenbearbeitungsgerät so auszugestalten, dass Hindernisse leichter überwunden werden können.

Zur Lösung dieser Aufgabe ist ein sich selbsttätig fortbewegendes Bodenbearbeitungsgerät gemäß dem Gegenstand des Anspruchs 1 angegeben und es wird vorgeschlagen, dass eine in Fortbewegungsrichtung weisende Anlagefläche des Anlageelementes und/oder eine die Anlageflächen zweier Anlageelemente verbindende Verbindungsgerade nicht parallel zu der Antriebsachse des Antriebselementes orientiert ist und bezogen auf die Fortbewegungsrichtung von einer Anlagefläche des Antriebselementes einen Abstand aufweist, der geringer ist als ein Durchmesser des Antriebselementes.

Die erfindungsgemäß vorgeschlagene Schrägstellung der Anlagefläche bzw. der Anlageflächen relativ zu der Antriebsachse des Antriebselementes - und damit auch der Fortbewegungsrichtung des Bodenbearbeitungsgerätes - bewirkt, dass es bei einem Kontakt der Anlagefläche des Anlageelementes bzw. der Anlageflächen der Anlageelemente mit dem Hindernis aufgrund des fortgeführten Antriebs des oder der Antriebselemente zu einer Schrägstellung des Bodenbearbeitungsgerätes an dem Hindernis kommt, wodurch dann die Antriebsachse des Antriebselementes nicht parallel zu der Kante des Hindernisses steht. Dadurch gelangt zunächst nur eines von zwei Antriebselementen bzw. nur ein Endbereich eines einzigen Antriebselementes in Kontakt mit dem Hindernis, so dass das jeweils andere Antriebselement bzw. der gegenüberliegende Endbereich des Antriebselementes weiterhin in optimaler Art und Weise Kraft auf die befahrene Fläche ausübt, um das Hindernis zu überwinden. Durch das erfindungsgemäße Merkmal, dass die Anlagefläche bzw. die Verbindungsgerade bezogen auf die Fortbewegungsrichtung des Bodenbearbeitungsgerätes von einer Anlagefläche des Antriebselementes einen Abstand aufweist, der geringer ist als ein Durchmesser des Antriebselementes, wird erreicht, dass sich die Anlagefläche bzw. die Verbindungsgerade in Fortbewegungsrichtung unmittelbar vor einem Antriebselement befindet. Dadurch erfolgt die bei Auftreffen des Bodenbearbeitungsgerätes, nämlich des Anlageelementes, auf ein Hindernis erzwungene Schrägstellung des Bodenbearbeitungsgerätes zeitlich unmittelbar vor einem Kontakt des Antriebselementes mit dem Hindernis. Besonders vorteilhaft geht der Abstand zwischen der Anlagefläche bzw. der Verbindungsgerade und dem Antriebselement gegen Null, so dass die Anlagefläche bzw. die Verbindungsgerade oder eine geradlinige Verlängerung dieser das Antriebselement berührt. Bei dieser bevorzugten Ausgestaltung kann verhindert werden, dass das Bodenbearbeitungsgerät nach erfolgreicher Schrägstellung wieder in eine andere Richtung abgelenkt wird, nämlich beispielsweise durch Bodenunebenheiten oder ähnliches, bevor das Antriebselement das Hindernis erreicht. Insgesamt werden damit die Klettereigenschaften des Bodenbearbeitungsgerätes insbesondere bei einem relativ langsamen Überfahren von Hindernissen verbessert. Dadurch, dass das Bodenbearbeitungsgerät ein Hindernis nun zuverlässiger, insbesondere ohne mehrere vergebliche Anläufe, überfahren kann, verkürzt sich die Zeitdauer, die für einen Bodenbearbeitungszyklus benötigt wird. Dadurch kann wiederum eine Anzahl von Bodenbearbeitungszyklen pro Akkumulatorladung erhöht werden.

Das Anlageelement ist ein Anlageelement, welches in der Gebrauchsstellung zwar unterhalb des Gehäuses in Richtung der zu bearbeitenden Fläche ragt, aber von dieser beabstandet ist. In dem letztgenannten Fall weist das Anlageelement in der Gebrauchsstellung des Bodenbearbeitungsgerätes vorzugsweise einen Abstand von weniger als ungefähr 10 mm zu der Fläche auf, so dass es zu einem Kontakt mit überfahrbaren Hindernissen wie Türschwellen oder Teppichkanten kommen kann. Vorzugsweise kann das Anlageelement an einem der Fläche zugewandten Endbereich eine Rolle oder ein Gleitelement aufweisen, welches bei fortgeführter Fortbewegung des Bodenbearbeitungsgerätes ein Passieren des Hindernisses erlaubt. Besonders bevorzugt kann dem Anlageelement dabei ein Federelement zugeordnet sein, welches bei Überwinden der Rückstellkraft durch die Antriebskraft des Bodenbearbeitungsgerätes eine Verlagerung des Anlageelementes bewirkt.

Es kann vorgesehen sein, dass das Anlageelement und/oder die Anlageelemente bezogen auf eine die Antriebsachse halbierende Mittellinie, welche quer zu der Antriebsachse steht, unsymmetrisch an dem Bodenbearbeitungsgerät angeordnet sind. Im Stand der Technik sind die die Gehäuseunterseite des Gehäuses durchsetzenden Elemente, wie Antriebselemente und Stützräder, üblicherweise symmetrisch zu einer Mittellinie der Antriebsachse bzw. einer Symmetriemittellinie der Gehäuseunterseite angeordnet. Dabei sind die Stützräder so angeordnet, dass diese jeweils gleiche Abstände zu der Mittellinie aufweisen. Davon abweichend wird nun vorgeschlagen, die Anlageelemente unsymmetrisch zu der Mittellinie und damit auch unsymmetrisch zu den Antriebselementen anzuordnen. Dadurch kann die zuvor beschriebene vorteilhafte Schrägstellung der Antriebsachse des Antriebselementes relativ zu dem Hindernis erreicht werden.

Des Weiteren wird vorgeschlagen, dass das Bodenbearbeitungsgerät zwei Anlageelemente aufweist, welche bezogen auf die Fortbewegungsrichtung seitlich zueinander versetzt hintereinander angeordnet sind. Gemäß dieser Ausgestaltung sind zwei - oder auch mehr - Anlageelemente so an dem Bodenbearbeitungsgerät angeordnet, dass diese während der Fortbewegung des Bodenbearbeitungsgerätes zeitversetzt an einem zu überwindenden Hindernis anschlagen. Durch die Hintereinanderanordnung der Anlageelemente in Fortbewegungsrichtung kommt es zunächst nur zu einem Kontakt des in Fortbewegungsrichtung zuerst angeordneten Anlageelementes, während ein zweites dahinter angeordnetes Anlageelement noch von dem Hindernis beabstandet ist.

Insbesondere wird vorgeschlagen, dass das Bodenbearbeitungsgerät mindestens zwei Antriebselemente aufweist, deren Antriebsachsen auf einer gemeinsamen Geraden liegen oder welche eine gemeinsame Antriebsachse aufweisen. Das Bodenbearbeitungsgerät weist gemäß dieser Ausgestaltung beispielsweise zwei angetriebene Räder auf, welche um eine gemeinsame Antriebsachse oder um zwei zueinander separat ausgebildete aber parallel zueinander orientierte Antriebsachsen rotieren. Sofern die Antriebselemente separate Antriebsachsen aufweisen, liegen die Antriebsachsen auf einer gemeinsamen Gerade.

Des Weiteren wird vorgeschlagen, dass die Anlageelemente in eine Richtung orthogonal zu der Antriebsachse einen Abstand von wenigen Millimetern zueinander aufweisen. Die Richtung orthogonal zu der Antriebsachse entspricht der Fortbewegungsrichtung des Bodenbearbeitungsgerätes. Insbesondere wird ein Abstand der Anlageelemente von 3 mm bis 10 mm, besonders bevorzugt von 4 mm bis 6 mm, vorgeschlagen. In der Praxis hat es sich gezeigt, dass bereits ein Versatz der Anlageelemente von ungefähr 4 mm orthogonal zu der Antriebsachse ausreicht, um eine zeitversetzte Ankunft der Antriebselemente an dem Hindernis bzw. ein zunächst nur einseitiges Anfahren eines Endbereiches des Antriebselementes an dem Hindernis zu ermöglichen.

Im Sinne der Erfindung kann ein Antriebselement ein motorisch angetriebenes Rad oder eine motorisch angetriebene Bodenbearbeitungswalze des Bodenbearbeitungsgerätes sein. Beispielsweise ist auch eine Ausführungsform eines Bodenbearbeitungsgerätes denkbar, welches keine separaten motorisch angetriebenen Räder aufweist, sondern die Fortbewegung des Bodenbearbeitungsgerätes über zumindest eine motorisch angetriebene Bodenbearbeitungswalze erreicht, die gleichzeitig die Bodenbearbeitung der Fläche ausführt. Insbesondere kann das Bodenbearbeitungsgerät auch zwei Bodenbearbeitungswalzen aufweisen, deren Antriebsachsen nicht parallel zueinander orientiert sind. Dabei stellt eine der Bodenbearbeitungswalzen das hier so definierte Anlageelement dar, so dass es bei einem Kontakt einer der Bodenbearbeitungswalzen mit einem Hindernis zu einer entsprechenden Schrägstellung der jeweils anderen Bodenbearbeitungswalze relativ zu dem Hindernis kommt und dieses somit besonders vorteilhaft nach der vorgeschlagenen Wirkungsweise durch die Antriebskraft der anderen Bodenbearbeitungswalze überwunden werden kann.

Des Weiteren wird offenbart, dass das Anlageelement des Bodenbearbeitungsgerätes ein motorisch angetriebenes Rad, ein passiv bei einer Fortbewegung des Bodenbearbeitungsgerätes mitrotierendes Führungsrad oder ein Bodenbearbeitungselement ist. Ein Anlageelement kann somit entweder aktiv angetrieben oder passiv bei einer Fortbewegung mitrotierend sein. Da in Kombination mit einem nicht aktiv angetriebenen Anlageelement stets ein motorisch angetriebenes Antriebselement eingesetzt wird, kann das Schrägziehen des Bodenbearbeitungsgerätes an einem zu überwindenden Hindernis erreicht werden. Die Anlageelemente können beispielsweise Stützräder des Bodenbearbeitungsgerätes oder auch passiv rotierende Bodenbearbeitungselemente sein, welche eine Reibkraft auf die zu bearbeitende Fläche ausüben. Des Weiteren kann ein Anlageelement jedoch auch so an dem Bodenbearbeitungsgerät angeordnet und ausgebildet sein, dass dieses die zu bearbeitende Fläche gar nicht berührt. Gemäß dieser Ausführung dient das Anlageelement nicht der Abstützung gegenüber der Fläche, sondern dem Kontakt mit einem Hindernis, welches sich von der zu bearbeitenden Fläche erhebt. In einem besonders einfachen Fall ist das Anlageelement ein unterhalb des Gehäuses in Richtung der Fläche hervorstehender Vorsprung. Das Anlageelement weist vorzugsweise einen Abstand zu der zu bearbeitenden Fläche auf, welcher geringer ist als die Höhe üblicherweise zu überwindender Hindernisse wie Türschwellen oder Teppichkanten.

Gemäß einer besonders bevorzugten Ausführungsform wird vorgeschlagen, dass das Anlageelement dem Antriebselement bezogen auf eine übliche Fortbewegung des Bodenbearbeitungsgerätes in Vorwärtsrichtung vorauseilt. Das die Schrägstellung des Bodenbearbeitungsgerätes erzwingende Anlageelement bzw. die derart wirkenden mehreren Anlageelemente bewirken die Schrägstellung des Bodenbearbeitungsgerätes dann, wenn sich das Bodenbearbeitungsgerät in einer üblichen Vorwärtsrichtung auf das Hindernis zubewegt, so dass zeitlich vor dem Antriebselement zunächst das oder die Anlageelemente in Kontakt mit dem Hindernis gelangen. In gleicher Art und Weise kann es jedoch auch vorgesehen, das Bodenbearbeitungsgerät so auszustatten, dass dieses zusätzlich oder nur bei einer Fortbewegung in Rückwärtsrichtung zunächst mit einem oder mehreren Anlageelementen in Kontakt tritt und dann erst mit dem bzw. den Antriebselementen.

Es wird vorgeschlagen, dass die Antriebsachse des Antriebselementes und eine Anlagefläche des Anlageelementes oder eine zwei Anlageelemente verbindende Verbindungsgerade einen Winkel ungleich Null zueinander aufweisen. Insbesondere wird vorgeschlagen, dass der Winkel mehr als 5° und weniger als 15° aufweist. Besonders bevorzugt beträgt der Winkel mehr als 5° und weniger als 10°. Der vorgeschlagene Winkelbereich gibt gleichzeitig die Schrägstellung des Bodenbearbeitungsgerätes an einem Hindernis vor. Bei einem Winkel von beispielsweise 10° zwischen der Anlagefläche bzw. der Verbindungsgeraden und der Antriebsachse stellt sich das Bodenbearbeitungsgerät um 10° schräg zu der bisherigen Fortbewegungsrichtung. Das Bodenbearbeitungsgerät weicht somit von der bisherigen geradlinigen Fortbewegungsrichtung ab und überfährt eine Kante eines Hindernisses schräg, so dass die neue Fortbewegungsrichtung nicht orthogonal zu einer Schwelle bzw. Kante des Hindernisses orientiert ist. Die Schrägstellung des Bodenbearbeitungsgerätes kann gegebenenfalls von einer Navigations- und Selbstlokalisierungseinrichtung des Bodenbearbeitungsgerätes nach vollständigem Überwinden des Hindernisses durch das Bodenbearbeitungsgerät wieder korrigiert werden, so dass das Bodenbearbeitungsgerät auf einer geplanten Fortbewegungsroute weiterfährt.

### Kurze Beschreibung der Zeichnungen

Im Folgenden wird die Erfindung anhand von Ausführungsbeispielen näher erläutert. Es zeigen:
- Fig. 1: eine perspektivische Ansicht eines erfindungsgemäßen Bodenbearbeitungsgerätes,
- Fig. 2: eine Unteransicht eines Bodenbearbeitungsgerätes gemäß dem Stand der Technik,
- Fig. 3: das Bodenbearbeitungsgerät gemäß Figur 2 beim Überwinden eines Hindernisses,
- Fig. 4: eine Unteransicht eines erfindungsgemäßen Bodenbearbeitungsgerätes,
- Fig. 5: das Bodenbearbeitungsgerät gemäß Figur 4 beim Überwinden eines Hindernisses,
- Fig. 6: eine weitere Ausführungsform eines erfindungsgemäßen Bodenbearbeitungsgerätes,
- Fig. 7: eine weitere Ausführungsform eines erfindungsgemäßen Bodenbearbeitungsgerätes.

### Beschreibung der Ausführungsformen

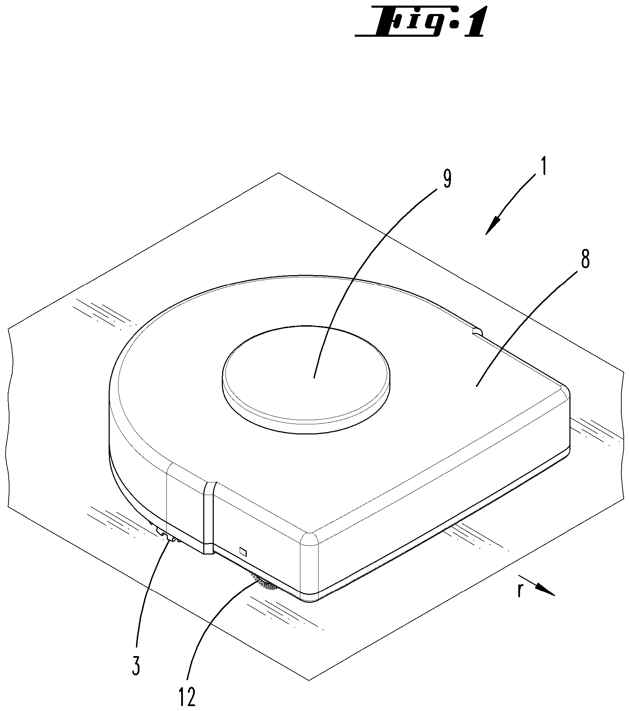

Figur 1 zeigt ein erfindungsgemäßes Bodenbearbeitungsgerät 1, welches hier als Saugroboter ausgebildet ist. Das Bodenbearbeitungsgerät 1 verfährt selbständig über eine Fläche und weist dazu eine Navigations- und Selbstlokalisierungseinrichtung auf, mit welcher eine Orientierung innerhalb von Räumlichkeiten sowie das Erstellen einer Umgebungskarte möglich ist. Das Bodenbearbeitungsgerät 1 verfügt über zwei Antriebselemente 3 und mehrere Anlageelemente 5, 11, 12, von welchen in Figur 1 nur ein als Borstenwalze ausgebildetes Anlageelement 12 sichtbar ist. Das Bodenbearbeitungsgerät 1 stützt sich einerseits über die Antriebselemente 3 und andererseits über die Anlageelemente 5 auf der zu reinigenden Fläche ab, wobei sowohl die Antriebselemente 3 als auch das als Borstenwalze ausgebildete Anlageelement 12 motorisch angetrieben sind. Das Bodenbearbeitungsgerät 1 weist eine Vorwärtsrichtung r auf, welche durch die Orientierung einer Antriebsachse 2 der Antriebselemente 3 vorgegeben ist, und der Abrollrichtung der Antriebselemente 3 entspricht.

In einem Gehäuse 8 des Bodenbearbeitungsgerätes 1 ist eine Abstandsmesseinrichtung 9 angeordnet, welche Abstände zu Hindernissen 10 innerhalb der Umgebung des Bodenbearbeitungsgerätes 1 misst. Die Abstandsmesseinrichtung 9 ist hier beispielsweise als Triangulationsmesseinrichtung ausgebildet, welche Abstände zu Hindernissen 10 vorzugsweise in einem Winkelbereich von 360° messen kann. Die Abstandsmesseinrichtung 9 ist Teil der Navigations- und Selbstlokalisierungseinrichtung des Bodenbearbeitungsgerätes 1.

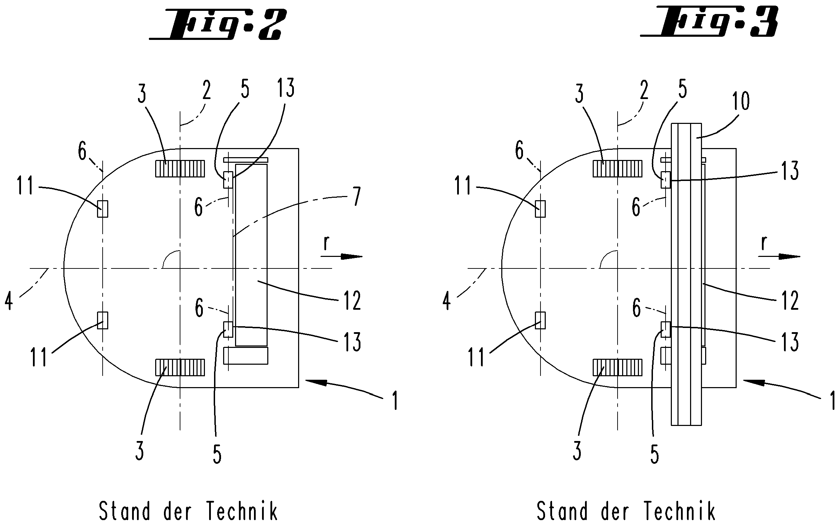

Die Figuren 2 und 3 zeigen zunächst eine Unterseite eines Bodenbearbeitungsgerätes 1 nach dem Stand der Technik. Im Einzelnen weist das Bodenbearbeitungsgerät 1 zwei motorisch angetriebene Antriebselemente 3 auf, welche hier über eine gemeinsame Antriebsachse 2 von einem Elektromotor angetrieben werden. Des Weiteren verfügt das Bodenbearbeitungsgerät 1 über eine Mehrzahl von Anlageelementen 5,11,12, von welchen die Anlageelemente 11 und die Anlageelemente 5 jeweils paarweise angeordnet sind. Die Anlageelemente 5, 11, 12 weisen jeweils eine in Fortbewegungsrichtung weisende Anlagefläche 13 auf, die parallel zu der Antriebsachse 2 der Antriebselemente 3 orientiert ist. Die Anlageelemente 5 und 11 sind Stützräder, die sich bei einer Fortbewegung des Bodenbearbeitungsgerätes 1 passiv auf der Fläche abrollen. Das Anlageelement 12 ist die zuvor bereits erwähnte Borstenwalze, welche für eine Bürstbearbeitung der zu reinigenden Fläche motorisch antreibbar ist. Die Rotationsachsen 6 der Anlageelemente 5 bzw. die Rotationsachsen 6 der Anlageelemente 11 liegen auf einer gemeinsamen Gerade. Zur näheren Beschreibung der Erfindung ist die in Figur 2 dargestellte Mittellinie 4 definiert, welche orthogonal zu der Antriebsachse 2 orientiert ist und die Antriebsachse 2 halbiert. Die Mittellinie 4 ist parallel zu der üblichen Vorwärtsrichtung r des Bodenbearbeitungsgerätes 1 orientiert.

Figur 3 zeigt eine Situation, in welcher das Bodenbearbeitungsgerät 1 auf ein Hindernis 10 stößt, das von dem Bodenbearbeitungsgerät 1 überwunden werden kann. Das Hindernis 10 ist hier beispielsweise eine Türschwelle. Bei der Fortbewegung des Bodenbearbeitungsgerätes 1 in Vorwärtsrichtung r trifft zu einem ersten Zeitpunkt zunächst die Anlagefläche 13 des Anlageelementes 12 auf das Hindernis 10. Zu einem späteren, zweiten Zeitpunkt treffen die Anlageflächen 13 der beiden dahinter liegenden Anlageelemente 5 zeitgleich auf das Hindernis 10. Der dem Bodenbearbeitungsgerät 1 durch das Hindernis 10 entgegengesetzte Widerstand muss durch die Antriebselemente 3 des Bodenbearbeitungsgerätes 1 überwunden werden, damit die Anlageelemente 5, 12 über das Hindernis 10 geschoben werden können. Sobald die Anlageelemente 5, 12 das Hindernis 10 überwunden haben, treffen bei der weiteren Fortbewegung des Bodenbearbeitungsgerätes 1 die beiden Antriebselemente 3 zeitgleich auf das Hindernis 10. Da sich beide Antriebselemente 3 gleichzeitig auf der Fläche abstützen und an dem Hindernis 10 hochfahren müssen, ist das Überqueren des Hindernisses 10 erschwert.

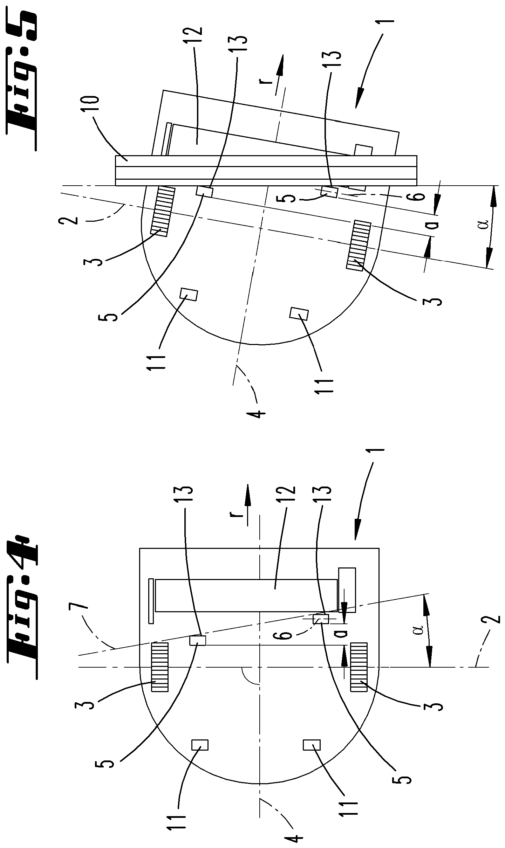

Die Figuren 4 bis 7 zeigen gegenüber dem zuvor dargestellten Stand der Technik drei verschiedene Ausführungsformen, welche das Überwinden eines Hindernisses 10 erleichtern. Die dargestellten Ausführungsformen betreffen dabei nur eine Auswahl einer Vielzahl von weiteren möglichen Ausführungsformen und sind nicht beschränkend zu verstehen.

Die Figuren 4 und 5 zeigen eine erste Ausführungsform, bei welcher die Anlageelemente 5 bezogen auf die Vorwärtsrichtung r des Bodenbearbeitungsgerätes 1 seitlich versetzt hintereinander angeordnet sind, so dass diese unterschiedliche Abstände zu der Antriebsachse 2 der Antriebselemente 3 aufweisen. Dadurch ergeben sich gleichzeitig unterschiedliche Abstände der Anlageelemente 5 relativ zu dem als Borstenwalze ausgebildeten Anlageelement 12. Wie dargestellt ist dadurch eine die Anlageflächen 13 der beiden Anlageelemente 5 imaginär verbindende Verbindungsgerade 7 nicht parallel zu der Antriebsachse 2 orientiert, wobei die Antriebsachse 2 und die Verbindungsgerade 7 hier einen Winkel α von beispielsweise 10° aufweisen. Ein Abstand a der Anlageelemente 5 in eine Richtung parallel der Mittellinie 4 beträgt beispielsweise ungefähr 4 mm, wobei der Abstand a hier nicht maßstabsgetreu zu der abgebildeten Größe des Bodenbearbeitungsgerätes 1 dargestellt ist.

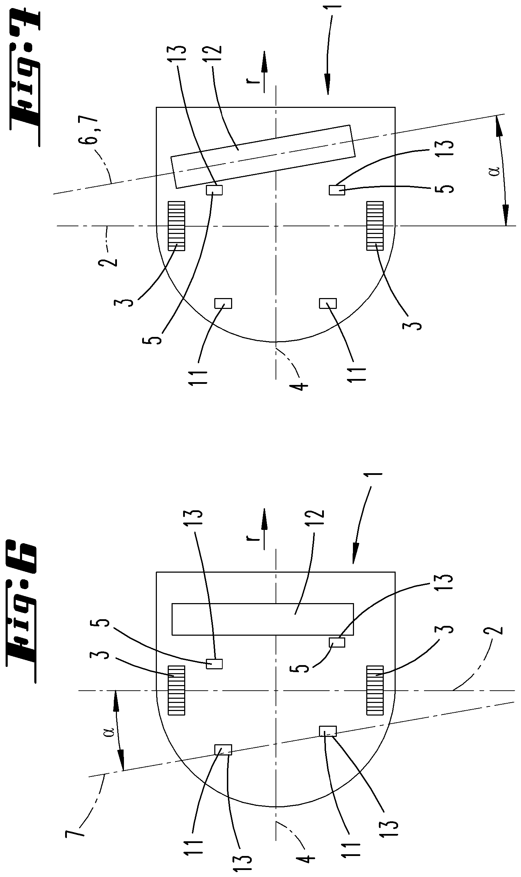

Figur 5 zeigt das Bodenbearbeitungsgerät 1 gemäß Figur 4 bei einem Auftreffen der Anlageflächen 13 der Anlageelemente 5 auf ein Hindernis 10, welches hier ebenfalls wieder eine Türschwelle sein kann. In der dargestellten Situation hat das als Borstenwalze ausgebildete Anlageelement 12 das Hindernis 10 bereits überfahren, so dass die als Stützräder ausgebildeten Anlageelemente 5 gegen das Hindernis 10 stoßen. Solange sich das Bodenbearbeitungsgerät 1 noch in die in Figur 4 dargestellte Vorwärtsrichtung r bewegt, ist die Antriebsachse 2 der Antriebselemente 3 noch parallel zu der Kante des Hindernisses 10 orientiert. Dadurch gelangt zunächst erst ein, nämlich hier das in der Figur untere, Anlageelement 5 in Kontakt mit dem Hindernis 10. Dadurch wird das Bodenbearbeitungsgerät 1 um den damit gebildeten Drehpunkt des Anlageelementes 5 geschwenkt bis auch das andere Anlageelement 5 (in der Figur oben) gegen das Hindernis 10 trifft. Dabei ergibt sich die in Figur 5 dargestellte neue Vorwärtsrichtung r. In der Endstellung befinden sich somit beide Anlageelemente 5 an der Kante des Hindernisses 10. Die Antriebsachse 2 der Antriebselemente 3 ist dadurch relativ zu dem Hindernis 10 schräggestellt, wobei der Winkel zwischen der Antriebsachse 2 und dem Hindernis 10 dem Winkel zwischen der Antriebsachse 2 und der Verbindungsgeraden 7 der Anlageelemente 5 entspricht, nämlich hier 10°. Bei der weiteren Fortbewegung des Bodenbearbeitungsgerätes 1 in Richtung der neuen Vorwärtsrichtung r treffen die Antriebselemente 3 zeitlich versetzt auf das Hindernis 10, wobei zunächst nur ein erstes der Antriebselemente 3 auf das Hindernis 10 trifft (siehe Figur 5). Die Verbindungsgerade 7 weist hier bezogen auf die Fortbewegungsrichtung r einen gegen Null gehenden Abstand von der Anlagefläche des Antriebselements 3 auf, d. h., dass die Verbindungsgerade 7 eines der Antriebselemente 3 in den Figuren 4 und 5 berührt oder schneidet. Dadurch kontaktiert das Antriebselement 3 das Hindernis 10 im Wesentlichen in dem Moment, in welchem das Bodenbearbeitungsgerät 1 durch das Auftreffen der Anlagefläche 13 auf das Hindernis 10 schräg gestellt ist. Das Antriebselement 3 kann das Hindernis 10 somit zeitlich unmittelbar überwinden, ohne dass die Möglichkeit besteht, dass das Bodenbearbeitungsgerät 1 vor Überwinden des Hindernisses 10 wieder gerade gestellt wird. In der Praxis hat es sich gezeigt, dass es für eine optimale Überwindung des Hindernisses 10 durch die Antriebselemente 3 ausreichend ist, wenn die Anlagefläche 13 des Anlageelementes 5, bzw. hier die Verbindungsgerade 7, bezogen auf die Fortbewegungsrichtung des Bodenbearbeitungsgerätes 1 einen Abstand zu einer Anlagefläche des Antriebselementes 3 aufweist, der zwar ungleich Null, aber geringer ist als ein Durchmesser des Antriebselementes 3 (siehe dazu beispielsweise auch Figuren 6 und 7). Als Anlagefläche des Antriebselementes 3 wird eine in Fortbewegungsrichtung r vorauseilende Umfangsfläche des Antriebselements 3 verstanden, welche als erstes in Kontakt mit dem Hindernis 10 tritt. Diese hängt nicht zuletzt auch von der Höhe des Hindernisses 10 und dem Durchmesser des Antriebselements 3 ab. Dadurch, dass das zweite Antriebselement 3 in Figur 4 noch nicht in Kontakt mit dem Hindernis 10 steht, kann dieses seine Antriebskraft noch optimal auf die Fläche übertragen, so dass das erste Antriebselement 3 das Hindernis 10 überwinden kann. Das zeitlich versetzte Auftreffen der Antriebselemente 3 auf das Hindernis 10 verbessert die Haftung der Antriebselemente 3 auf der Fläche bzw. an der Kante des Hindernisses 10, so dass im Ergebnis ein Überfahren des Hindernisses 10 gegenüber dem Stand der Technik deutlich vereinfacht wird.

Die Figuren 6 und 7 zeigen zwei weitere Ausführungsformen erfindungsgemäßer Bodenbearbeitungsgeräte 1, bei welchen ein Überwinden von Hindernissen 10 ebenfalls durch ein erzwungenes, schräges Überfahren vereinfacht ist.

Figur 6 zeigt eine Ausführungsform, bei welcher sowohl die Anlageelemente 5, als auch die Anlageelemente 11 versetzt hintereinander angeordnet sind, so dass sowohl bei einer Fahrt in Vorwärtsrichtung r als auch bei einer Fahrt entgegen der Vorwärtsrichtung r zunächst nur jeweils eines der Anlageelemente 5 bzw. 11 auf das Hindernis 10 trifft. Die Anlageelemente 11 dienen dabei zur verbesserten Überwindung eines Hindernisses 10 während einer Rückwärtsfahrt des Bodenbearbeitungsgerätes 1, d. h. bei einer Fortbewegung des Bodenbearbeitungsgerätes 1 entgegen der üblichen Vorwärtsrichtung r.

Figur 7 zeigt eine weitere Ausführungsform, bei welcher das als Borstenwalze ausgebildete Anlageelement 12 einen Winkel α ungleich 0° zu der Antriebsachse 2 der Antriebselemente 3 aufweist. Bei dieser Ausgestaltung kommt es bei einer Annäherung des Bodenbearbeitungsgerätes 1 an das Hindernis 10 zunächst nur zu einem Kontakt zwischen einem der beiden axialen Endbereiche des Anlageelementes 12 und dem Hindernis 10. Der gegenüberliegende Endbereich des Anlageelementes 12 trifft erst zeitlich später auf das Hindernis 10. Wenn schließlich beide Endbereiche des Anlageelementes 12 das Hindernis 10 kontaktieren, weist das Bodenbearbeitungsgerät 1 eine Schrägstellung zu der Kante des Hindernisses 10 auf, wobei die Antriebsachse 2 und die zu überwindende Kante des Hindernisses 10 nicht parallel zueinander orientiert sind. In dieser Schrägstellung gelangt zunächst erst nur eines der Antriebselemente 3 in Kontakt mit dem Hindernis 10, während das jeweils andere Antriebselement 3 noch seine ganze Kraft auf die Fläche ausüben kann.

In den Ausführungsbeispielen gemäß den Figuren 6 und 7 ist der Abstand zwischen der Verbindungsgerade 7 des Anlageelementes 12 (Figur 7) bzw. der Verbindungsgerade 7 der Anlagefläche 13 der Anlageelemente 11 (Figur 6) und einer Anlagefläche des Antriebselements 3 größer als Null und kleiner als der Durchmesser des Antriebselements 3. Die Anlagefläche des Antriebselements 3 befindet sich je nach der Größe des Hindernisses 10 und dem Durchmesser des Antriebselementes 3 bezogen auf die dargestellte Draufsicht irgendwo zwischen der Antriebsachse 2 und der Laufflächenkontur des Antriebselements 3 und ist im Wesentlichen parallel zu der Antriebsachse 2 orientiert.

### Liste der Bezugszeichen

- 1: Bodenbearbeitungsgerät
- 2: Antriebsachse
- 3: Antriebselement
- 4: Mittellinie
- 5: Anlageelement
- 6: Rotationsachse
- 7: Verbindungsgerade
- 8: Gehäuse
- 9: Abstandsmesseinrichtung
- 10: Hindernis
- 11: Anlageelement
- 12: Anlageelement
- 13: Anlagefläche

- α: Winkel

- a: Abstand
- r: Vorwärtsrichtung

## Patentansprüche

1. Sich selbsttätig fortbewegendes Bodenbearbeitungsgerät (1) mit einem Gehäuse (8), mindestens einem zur Fortbewegung elektromotorisch angetriebenen und um eine Antriebsachse (2) rotierbaren Antriebselement (3) und mindestens einem dem Antriebselement (3) in eine Fortbewegungsrichtung vorauseilenden Anlageelement (5, 11, 12), welches sich ausgehend von einer Gehäuseunterseite des Gehäuses (8) in Richtung einer zu bearbeitenden Fläche erstreckt, wobei eine in Fortbewegungsrichtung weisende Anlagefläche (13) des Anlageelementes (5, 11, 12) und/oder eine die Anlageflächen (13) zweier Anlageelemente (5, 11, 12) verbindende Verbindungsgerade (7) nicht parallel zu der Antriebsachse (2) des Antriebselementes (3) orientiert ist und bezogen auf die Fortbewegungsrichtung von einer Anlagefläche des Antriebselementes (3) einen Abstand aufweist, der geringer ist als ein Durchmesser des Antriebselementes (3) **dadurch gekennzeichnet, dass** das Anlageelement (5, 11, 12) in der Gebrauchsstellung unterhalb des Gehäuses (8) in Richtung der zu bearbeitenden Fläche ragt, aber von dieser beabstandet ist.

2. Bodenbearbeitungsgerät (1) nach Anspruch 1, **dadurch gekennzeichnet, dass** das Bodenbearbeitungsgerät (1) zwei Anlageelemente (5, 11, 12) aufweist, welche bezogen auf die Fortbewegungsrichtung seitlich zueinander versetzt hintereinander angeordnet sind.

3. Bodenbearbeitungsgerät (1) nach Anspruch 1 oder 2, **gekennzeichnet durch** mindestens zwei Antriebselemente (3), deren Antriebsachsen (2) auf einer gemeinsamen Geraden liegen oder welche eine gemeinsame Antriebsachse (2) aufweisen.

4. Bodenbearbeitungsgerät (1) nach einem der vorhergehenden Ansprüche, **dadurch gekennzeichnet, dass** die Anlageelemente (5, 11, 12) in eine Richtung orthogonal zu der Antriebsachse (2) einen Abstand (a) von wenigen Millimetern, insbesondere von 3 mm bis 10 mm, zueinander aufweisen.

5. Bodenbearbeitungsgerät (1) nach einem der vorhergehenden Ansprüche, **dadurch gekennzeichnet, dass** das Antriebselement (3) ein motorisch angetriebenes Rad oder eine motorisch angetriebene Bodenbearbeitungswalze ist.

6. Bodenbearbeitungsgerät (1) nach einem der vorhergehenden Ansprüche, **dadurch gekennzeichnet, dass** das Anlageelement (5, 11, 12) dem Antriebselement (3) bezogen auf eine übliche Fortbewegung des Bodenbearbeitungsgerätes (1) in eine Vorwärtsrichtung (r) vorauseilt.

7. Bodenbearbeitungsgerät (1) nach einem der vorhergehenden Ansprüche, **dadurch gekennzeichnet, dass** die Antriebsachse (2) des Antriebselementes (3) und eine Anlagefläche (13) des Anlageelementes (5, 11, 12) oder eine zwei Anlageelemente (5, 11, 12) verbindende Verbindungsgerade (7) einen Winkel (α) ungleich Null zueinander aufweisen.

8. Bodenbearbeitungsgerät (1) nach Anspruch 7, **dadurch gekennzeichnet, dass** der Winkel (α) mehr als 5° und weniger als 15°, insbesondere mehr als 5° und weniger als 10°, aufweist.

## Claims

1. An automatically moving floor processing device (1) with a housing (8), at least one drive element (3) that is driven by an electric motor and can rotate around a drive axle (2) for movement purposes, and at least one contact element (5, 11, 12) that moves ahead of the drive element (3) in the direction of movement, which extends from a housing underside of the housing (8) in the direction of a surface to be processed, wherein a contact surface (13) of the contact element (5, 11, 12) pointing in the direction of movement and/or a connecting line (7) that connects the contact surfaces (13) of two contact elements (5, 11, 12) is oriented nonparallel to the drive axle (2) of the drive element (3), and is spaced apart from a contact surface of the drive element (3) by a distance relative to the direction of movement that is less than one diameter of the drive element (3) **characterized in that** the contact element(5, 11, 12)in the use position extends underneath the housing toward the surface to be processed, but is spaced apart therefrom.

2. The floor processing device (1) according to claim 1, **characterized in that** the floor processing device (1) has two contact elements (5, 11, 12), which are laterally offset relative to each other one behind the other in relation to the direction of movement.

3. The floor processing device (1) according to claim 1 or 2, **characterized by** at least two drive elements (3), whose drive axles (2) lie on a shared line, or which have a shared drive axle (2).

4. The floor processing device (1) according to one of the preceding claims, **characterized in that** the contact elements (5, 11, 12) are spaced apart from each other by a distance (a) of a few millimeters, in particular of 3 mm to 10 mm, in a direction orthogonal to the drive axles (2) .

5. The floor processing device (1) according to one of the preceding claims, **characterized in that** the drive element (3) is a motor-driven wheel or a motor-driven floor processing roller.

6. The floor processing device (1) according to one of the preceding claims, **characterized in that** the contact element (5, 11, 12) moves ahead of the drive element (3) in relation to a usual movement of the floor processing device (1) in a forward direction (r).

7. The floor processing device (1) according to one of the preceding claims, **characterized in that** the drive axle (2) of the drive element (3) and a contact surface (13) of the contact element (5, 11, 12) or a connecting line (7) connecting two contact elements (5, 11, 12) has an angle (α) unequal to zero relative to each other.

8. The floor processing device (1) according to claim 7, **characterized in that** the angle (α) is more than 5° and less than 15°, in particular more than 5° and less than 10° .

## Revendications

1. Dispositif de traitement du sol (1) à déplacement automatique, avec un boîtier (8), au moins un élément d'entraînement (3) entraîné par un moteur électrique pour le déplacement et pouvant tourner autour d'un axe d'entraînement (2), et au moins un élément d'appui (5, 11, 12) qui est monté en amont de l'élément d'entraînement (3) dans la direction de déplacement et qui s'étend en direction d'une surface à traiter en partant d'un côté inférieur du boîtier (8), dans lequel une surface d'appui (13) de l'élément d'appui (5, 11, 12) tournée dans la direction de déplacement et/ou une droite de liaison (7) reliant les surfaces d'appui (13) de deux éléments d'appui (5, 11, 12) est orientée de manière non parallèle à l'axe d'entraînement (2) de l'élément d'entraînement (3) et, par rapport à la direction de déplacement, se trouve à une distance d'une surface d'appui de l'élément d'entraînement (3) qui est inférieure à un diamètre de l'élément d'entraînement (3), **caractérisé en ce que**, en position d'utilisation, l'élément d'appui (5, 11, 12) fait saillie sous le boîtier (8) en direction de la surface à traiter, mais en étant espacé de celle-ci.

2. Dispositif de traitement du sol (1) selon la revendication 1, **caractérisé en ce que** le dispositif de traitement du sol (1) comprend deux éléments d'appui (5, 11, 12) qui sont agencés latéralement et décalés l'un derrière l'autre par rapport à la direction de déplacement.

3. Dispositif de traitement du sol (1) selon la revendication 1 ou 2, **caractérisé par** au moins deux éléments d'entraînement (3) dont les axes d'entraînement (2) se trouvent sur une ligne droite commune ou qui ont un axe d'entraînement commun (2).

4. Dispositif de traitement du sol (1) selon l'une des revendications précédentes, **caractérisé en ce que** les éléments d'appui (5, 11, 12) présentent entre eux une distance (a) de quelques millimètres, en particulier de 3 mm à 10 mm, dans une direction orthogonale à l'axe d'entraînement (2).

5. Dispositif de traitement du sol (1) selon l'une des revendications précédentes, **caractérisé en ce que** l'élément d'entraînement (3) est une roue motorisée ou un rouleau de traitement du sol motorisé.

6. Dispositif de traitement du sol (1) selon l'une des revendications précédentes, **caractérisé en ce que** l'élément d'appui (5, 11, 12) se trouve en amont de l'élément d'entraînement (3) dans la direction vers l'avant (r) par rapport à un mouvement de déplacement habituel du dispositif de traitement du sol (1).

7. Dispositif de travail du sol (1) selon l'une des revendications précédentes, **caractérisé en ce que** l'axe d'entraînement (2) de l'élément d'entraînement (3) et une surface d'appui (13) de l'élément d'appui (5, 11, 12) ou une droite de liaison (7) reliant deux éléments d'appui (5, 11, 12) présentent l'un par rapport à l'autre un angle (α) non nul.

8. Dispositif de traitement du sol (1) selon la revendication 7, **caractérisé en ce que** l'angle (α) est supérieur à 5° et inférieur à 15°, en particulier supérieur à 5° et inférieur à 10°.
